# EUROPÄISCHE PATENTANMELDUNG

(11) **EP 4 447 198 A1**
(43) Veröffentlichungstag der Anmeldung: **16.10.2024**
(21) Anmeldenummer: 23167443.3
(22) Anmeldetag: 11.04.2023
(51) Int. Cl.: H01M 10/613, H01M 10/647, H01M 10/653, H01M 50/103, H01M 50/105, H01M 50/474, H01M 50/489

(54) **BATTERIEANORDNUNG MIT VARIABEL EINSTELLBARER PUFFEREINHEIT**

(71) Anmelder: Cellforce Group GmbH, 72072 Tübingen (DE)
(72) Erfinder: GRÄF, Jürgen, 72072 Tübingen (DE)

(57) **Zusammenfassung**

Die Erfindung betrifft eine Batterieanordnung, aufweisend eine Batteriezelle mit einem Zellengehäuse, aufweisend mindestens zwei Zellstapel, welche in dem Zellengehäuse angeordnet sind, und aufweisend mindestens eine Puffereinheit, wobei mindestens zwei Zellstapel durch die Puffereinheit voneinander beabstandet sind, wobei die Puffereinheit mindestens eine Wandung aufweist, wobei die Wandung zumindest bereichsweise thermisch leitfähig ausgestaltet ist. Des Weiteren sind Verfahren zum Einbringen von mindestens zwei Zellstapeln in ein Zellgehäuse offenbart.

## Beschreibung

Die Erfindung betrifft eine Batterieanordnung, aufweisend eine Batteriezelle mit einem Zellengehäuse, aufweisend mindestens zwei Zellstapel, welche in dem Zellengehäuse angeordnet sind, und aufweisend mindestens eine Puffereinheit. Des Weiteren betrifft die Erfindung Verfahren zum Einbringen von mindestens zwei Zellstapeln in ein Zellgehäuse.

Im Bereich von Lithium-Ionen-Batterien können die Zellstapel, welche in einem Zellgehäuse der Batterie angeordnet sind, anschwellen und somit unerwünschte mechanische Verspannungen des Zellgehäuses verursachen. Bedingt durch Alterungsprozesse kann bereits eine reguläre Volumenzunahme des Zellstapels erfolgen, sodass eine im Vorfeld geplante Vergrößerung des Zellgehäuses erforderlich sein kann. Eine derartige Vergrößerung des Zellgehäuses führt jedoch dazu, dass der Zellstapel nicht mehr ortsfest im Zellgehäuse verpresst ist und bei mechanischer Beanspruchung, beispielsweise im automobilen Bereich oder Luftfahrtbereich, innerhalb des Zellgehäuses schwingen bzw. sich bewegen kann. Eine derartige Bewegung des Zellstapels kann die Zellverbinder, welche die Aktivmaterialien elektrisch mit den Batteriepolen verbinden, beschädigen. Darüber hinaus können Zuleitungen zu Berstmembranen durch ungünstig positionierte oder verschobene Zellstapel versperrt werden, sodass bei einem Überdruck das Ableiten von gasförmigen Komponenten erschwert oder verhindert wird.

Es sind bereits Verfahren bekannt, welche mehrere Batteriezellen zu einem Batteriemodul zusammenfügen und diese gemeinsam verpressen. Eine derartige Maßnahme erfordert jedoch einen zusätzlichen Montageaufwand, insbesondere weil die Batteriezellen federnd verpresst sein müssen, um eine nachträgliche Volumenzunahme im Betrieb zu ermöglichen.

Die vorliegende Erfindung hat daher die Aufgabe, eine Batterieanordnung zu schaffen, die eine vorgegebene Position der Zellstapel innerhalb des Zellgehäuses sicherstellen, eine Volumenzunahme von Zellstapeln innerhalb eines Zellgehäuses kompensieren und eine Kühlung der Zellstapel verbessern kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Batterieanordnung bereitgestellt, die eine Batteriezelle mit einem Zellengehäuse und mit mindestens zwei Zellstapeln aufweist. Die Zellstapel sind in dem Zellengehäuse angeordnet. Weiterhin ist mindestens eine Puffereinheit vorgesehen, die zumindest zwei Zellstapel voneinander beabstandet. Vorteilhafterweise weist die Puffereinheit mindestens eine Wandung auf, wobei die Wandung zumindest bereichsweise thermisch leitfähig ausgestaltet ist.

Die thermisch leitfähige Wandung kann beispielsweise als ein komprimierbares Metallflies, Metallgeflecht oder Metallschaum ausgestaltet sein oder ein Metallflies, Metallgeflecht oder Metallschaum aufweisen.

Bei einer technisch besonders einfachen Ausgestaltung kann die mindestens eine Wandung aus einem Metallblech oder einer Metallfolie bestehen bzw. ein Metallblech oder einer Metallfolie aufweisen.

Die Batteriezelle kann als eine prismatische Zelle oder als eine Pouch Zelle ausgestaltet sein. Je nach Ausgestaltung der Batteriezelle können die mindestens zwei Zellstapel entlang ihrer flächigen Ausdehnung parallel nebeneinander angeordnet und durch die Puffereinheit beabstandet sein. Durch eine vordefinierte Anpresskraft bzw. Vorspannung der Zellstapel gegen die Puffereinheit und insbesondere gegen die Wandung der Puffereinheit kann ein unbeabsichtigtes Verschieben oder Deplatzieren der Zellstapel nach der Fertigstellung der Batteriezelle unterbunden werden.

Die mindestens eine Wandung der Puffereinheit kann als eine flexible und/oder komprimierbare Zwischenschicht zwischen den Zellstapeln ausgestaltet sein und eine Volumenveränderung der Zellstapel puffern bzw. kompensieren, wodurch ein im Vorfeld eingeplantes Überdimensionieren des Zellgehäuses entfällt.

Die thermisch leitfähige Ausgestaltung der Wandung der Puffereinheit ermöglicht ein besonders effizientes Ableiten von Wärme aus einem thermisch am stärksten belasteten Bereich einer Batteriezelle mit mehreren Zellstapeln. Randseitig kann die in den Zellstapeln entstehende Wärme über die Wände des Zellgehäuses abgeführt werden. Der Bereich zwischen zwei Zellstapeln ist jedoch thermisch isoliert, sodass die Anordnung einer thermisch leitfähigen Wandung der Puffereinheit zwischen zwei Zellstapeln eine besonders vorteilhafte Kühlung dieses Bereichs erzielen kann.

Gemäß einem Ausführungsbeispiel besteht mindestens eine Wandung der Puffereinheit aus einer oder mehreren Materialschichten. Vorteilhafterweise ist mindestens eine Materialschicht starr oder elastisch oder komprimierbar ausgestaltet. Durch die Verwendung von mehreren Materialschichten kann die Puffereinheit selbst oder mindestens eine Wandung der Puffereinheit einen Schichtaufbau aufweisen.

Die jeweiligen Materialschichten können unterschiedliche Funktionen aufweisen. Somit können die äußeren Materialschichten gezielt zum Abführen von Wärme und die inneren Materialschichten zum Ermöglichen einer Komprimierbarkeit bzw. eines Ausgleichs der Volumenveränderung der Zellstapel eingesetzt werden.

Je nach Ausgestaltung können die inneren Materialschichten ebenfalls einen Beitrag zur Wärmekapazität der Puffereinheit und zur Wärmeleitfähigkeit der Puffereinheit leisten.

Die Puffereinheit kann aus der mindestens einen Wandung bestehen oder weitere Komponenten, wie beispielsweise Verbindungsabschnitte, Hohlräume bzw. Volumen, Vorsprünge oder Querstege zur gezielten Positionierung und dergleichen aufweisen.

Nach einer weiteren Ausführungsform besteht eine äußere Materialschicht der Wandung der Puffereinheit, welche einem Zellstapel zugewandt angeordnet ist, und/oder ein Verstärkungsblech der Wandung aus einem thermisch leitfähigen Material. Darüber hinaus können ein oder mehrere Kerne oder zwischen zwei äußeren Materialschichten ausgebildete Schichten vorgesehen sein, welche ebenfalls thermisch leitfähig sein können.

Derartige Kerne oder Schichten können im Wesentlichen eine Aufgabe der Kompensation einer Volumenveränderung der Zellstapel übernehmen. Die mindestens eine äußere Materialschicht kann eine Aufgabe der Leitung von Wärme von mindestens einem Zellstapel, welcher gegen diese äußere Materialschicht gepresst ist bzw. mit dieser äußeren Materialschicht thermisch gekoppelt ist, übernehmen.

Weiterhin kann ein Kern durch ein Verstärkungsblech zumindest bereichsweise in mindestens zwei Hälften unterteilt werden oder alternativ können beidseitig des Verstärkungsblechs zwei Kerne angeordnet sein, die jeweils einem Zellstapel zugewandt sind. Das Verstärkungsblech kann somit mittig zwischen zwei inneren Materialschichten bzw. Kernen positioniert sein und strukturell die Puffereinheit gegenüber dem Zellgehäuse fixieren.

Das mindestens eine Verstärkungsblech kann als ein durchgehendes Blech, als ein perforiertes Blech, ein Lochblech und/oder als ein strukturiertes bzw. dreidimensional geprägtes Blech ausgestaltet sein.

Die thermisch leitfähige Ausführung der äußeren Materialschicht ermöglicht einen direkten Wärmekontakt mit mindestens einem flächig kontaktierten Zellstapel, sodass die Kühlwirkung der Puffereinheit gesteigert wird.

Bedingt durch die Tatsache, dass thermisch besonders gut leitfähige Materialien, wie beispielsweise Metalle, eine gegenüber Kunststoffen höhere Dichte aufweisen, kann durch die Beschränkung derartiger, schwerer Materialien auf die äußere Materialschicht das Gesamtgewicht der Batteriezelle mit einer erfindungsgemäßen Puffereinheit minimiert werden.

Der Beitrag der Puffereinheit zum Gesamtgewicht der Batteriezelle kann reduziert werden, wenn die äußere Materialschicht mindestens einer Wandung aus einem thermisch leitfähigen Kunststoff oder aus einem Metall oder aus einer Metalllegierung hergestellt ist oder die äußere Materialschicht eine thermisch leitfähige Beschichtung aufweist.

Gemäß einem weiteren Ausführungsbeispiel ist die Puffereinheit randseitig zumindest bereichsweise direkt oder indirekt mit dem Zellgehäuse, insbesondere thermisch leitfähig, verbunden. Die Puffereinheit kann beispielsweise derart formschlüssig oder reibschlüssig in das Zellgehäuse eingesetzt werden, dass an zumindest zwei einander gegenüberliegenden Wänden des Zellgehäuses ein Wärmeübergang zwischen der Puffereinheit und dem Zellgehäuse stattfinden kann. Das Zellgehäuse kann vorteilhafterweise aus einem Metall, wie beispielsweise Aluminium oder einer Aluminiumlegierung, hergestellt sein, sodass die durch die mindestens eine Wandung der Puffereinheit aufgenommene Wärmemenge gezielt über das Zellgehäuse abgegeben werden kann.

Insbesondere ist gemäß einem Ausführungsbeispiel das Verstärkungsblech zumindest bereichsweise thermisch leitend mit dem Zellgehäuse verbunden. Vorteilhafterweise ist die mindestens eine äußere Materialschicht zumindest bereichsweise mit dem Zellgehäuse und/oder mit dem Verstärkungsblech (50) thermisch leitend verbunden.

Je nach Ausgestaltung kann eine äußere Materialschicht eine oder mehrere innere Materialschichten am Verstärkungsblech arretieren bzw. befestigen.

Bei einer alternativen oder zusätzlichen Ausgestaltung kann die mindestens eine Puffereinheit stoffschlüssig mit dem Zellgehäuse verbunden werden. Dies kann beispielsweise durch ein Einbringen von Schweißverbindungen oder Lötverbindungen realisiert werden, die eine eingesetzte Puffereinheit randseitig mit dem Zellgehäuse verbinden.

Bei einer weiteren Ausführungsform, kann die mindestens eine Puffereinheit flexibel einstellbar ausgestaltet sein. Hierzu weist die mindestens eine Puffereinheit mindestens zwei Wandungen auf, welche mindestens ein mit einem Druck beaufschlagbares Volumen ausbilden. Die Puffereinheit kann somit als ein Luftpolster mit einem im Vorfeld einstellbarem Druck fungieren. Dabei kann das Volumen mit Luft oder einem anderem Gas oder einer Flüssigkeit gefüllt werden. Der Druck im zumindest einem Volumen der Puffereinheit kann hierbei im Vorfeld bzw. bei der Herstellung der Puffereinheit eingestellt werden. Eine mit dem Druck hergestellte Puffereinheit kann anschließend zusammen mit den Zellstapeln in das Zellgehäuse eingesetzt werden.

Neben der einstellbaren Vorspannung der Zellstapel kann durch den eingestellten Druck im Volumen auch eine Anpresskraft der Puffereinheit gegen das Zellgehäuse realisiert werden, um einen optimalen Wärmetransfer zwischen der Puffereinheit und dem Zellgehäuse auszubilden.

Nach einer weiteren Ausführungsform weist die Puffereinheit einen verschließbar ausgestalteten Anschluss auf, welcher mit dem mindestens einen Volumen fluidführend verbunden ist. Hierbei kann das Volumen nach dem Einsetzen der Zellstapel mit Druck beaufschlagt werden, wodurch die Montage der Batteriezelle und insbesondere das Einsetzen der Zellstapel in das Zellgehäuse vereinfacht wird.

Das mindestens eine Volumen der Puffereinheit kann technisch besonders auch nach dem Verschließen des Zellgehäuses beaufschlagt werden, wenn die Puffereinheit einen verschließbar ausgestalteten Anschluss aufweist, welcher sich durch eine Wandung des Zellgehäuses hindurch erstreckt und mit dem mindestens einen Volumen fluidführend verbunden ist.

Gemäß einem weiteren Ausführungsbeispiel ist die Puffereinheit randseitig zumindest bereichsweise indirekt über mindestens einen Verbindungssteg thermisch mit dem Zellgehäuse gekoppelt. Der mindestens eine Verbindungssteg kann dazu eingerichtet sein, einen besonders optimalen Wärmetransfer zwischen den Wandungen der Puffereinheit und dem Zellgehäuse auszubilden. Für eine verbesserte Positionierung der Zellstapel im Zellgehäuse ist im Bereich des Verbindungsstegs mindestens ein Quersteg vorgesehen.

Weiterhin kann der Verbindungssteg eine zusätzliche Positionierungsfunktion für die Zellstapel erfüllen. Hierdurch können die Zellstapel vor dem Beaufschlagen des Volumens der Puffereinheit mit einem vordefinierten Druck bzw. Überdruck relativ zum Zellgehäuse ausgerichtet werden. Das Beaufschlagen des Volumens der Puffereinheit mit einem Überdruck ermöglicht das Aufbringen einer Anpresskraft, sodass die Zellstapel durch die Puffereinheit gegen das Zellgehäuse gedrückt werden.

Bei einer Batteriezelle mit zwei Zellstapeln werden diese durch die Puffereinheit auseinander gegen die Wände des Zellgehäuses gespreizt.

Vorteilhafterweise kann das Zellgehäuse zur Abgabe von Wärme an eine räumliche Umgebung ausgerichtet sein. Dies kann beispielsweise durch eine direkte Anbindung von Kühlkanälen oder durch eine Belüftung umgesetzt sein.

Ein Kollabieren des Volumens der Puffereinheit während der Montage und beispielsweise bei einem Unterdruck im Volumen kann gezielt verhindert werden, wenn das mindestens eine Volumen der Puffereinheit zumindest bereichsweise mit einem ofenporigen Schaum oder einem Füllstoff gefüllt ist. Darüber hinaus kann diese Maßnahme ein plastisches Verformen der äußeren Materialschichten der Puffereinheit während der Fertigung der Batteriezelle verhindern.

Nach einer weiteren Ausführungsform ist das mindestens eine Volumen der Puffereinheit mit einem Gas oder einem Gasgemisch und/oder mit einer Flüssigkeit oder einem Flüssigkeitsgemisch befüllbar, um einen Druck innerhalb des Volumens einzustellen. Hierdurch kann der Überdruck im Volumen zum Verspannen der Zellstapel im Zellgehäuse flexibel mit Hilfe von unterschiedlichen Fluiden gebildet werden.

Gemäß einem weiteren Aspekt der Erfindung wird ein Verfahren zum Einbringen von mindestens zwei Zellstapeln in ein Zellgehäuse bereitgestellt. Dabei sind die mindestens zwei Zellstapel durch eine Puffereinheit voneinander beabstandet. In einem Schritt wird mindestens ein Volumen der Puffereinheit gegenüber einer Umgebung geöffnet oder mit einem Unterdruck beaufschlagt. In einem weiteren Schritt wird eine Anordnung aus Zellstapeln und der Puffereinheit in das Zellgehäuse hineingeschoben. In einem anschließenden Schritt werden die Zellstapel im Zellgehäuse durch Beaufschlagen des Volumens des Zellstapels mit einem Druck und Verschließen des Volumens ortsfest arretiert. Dieser Schritt kann nach dem Verschließen des Zellgehäuses oder vor dem Verschließen des Zellgehäuses durch Zelldeckel oder Kappen umgesetzt werden.

Das Verfahren kann das Einbringen der Zellstapel in das Zellgehäuses erleichtern, da die Puffereinheit in einem initialen Zustand keine oder eine minimale Krafteinwirkung auf die Zellstapel aufweist. Nach dem Einbringen kann ein optimaler Überdruck im Volumen der Puffereinheit eingestellt werden. Dieser Druck im Volumen kann bei einem außenliegenden Anschluss auch nachträglich, beispielsweise während des Betriebs der Batteriezelle, verändert werden.

Darüber hinaus kann durch diese Maßnahme auch ein Recycling der Batteriezellen erleichtert werden, wenn das Volumen der Puffereinheit vor dem Öffnen des Zellgehäuses "entlüftet" wird, um eine Vorspannung der Zellstapel durch die Puffereinheit zu lösen.

Der eingestellte Überdruck im Volumen der Puffereinheit und die hieraus resultierende Krafteinwirkung kann besonders vorteilhaft zum Herstellen einer flächigen Verbindung zwischen den äußeren Materialschichten bzw. Wandungen der Puffereinheit und den Zellstapeln eingesetzt werden. Diese Maßnahme führt dazu, dass die Puffereinheit durch den eingestellten Druck in mindestens einem Volumen zumindest bereichsweise thermisch mit dem Zellgehäuse gekoppelt wird.

Nach einer weiteren Ausführungsform wird die Puffereinheit zumindest bereichsweise stoffschlüssig, beispielsweise durch Schweißen oder Löten, thermisch leitend mit dem Zellgehäuse verbunden. Hierdurch kann ein optimaler Wärmeübergang zwischen der Puffereinheit und dem Zellgehäuse gewährleistet werden.

Gemäß einem weiteren Aspekt der Erfindung wird ein Verfahren zum Einbringen von mindestens zwei Zellstapeln in ein Zellgehäuse bereitgestellt. Dabei werden die mindestens zwei Zellstapel im Zellgehäuse durch eine Puffereinheit voneinander beabstandet. In einem Schritt des Verfahrens wird mindestens eine Puffereinheit in dem Zellgehäuse positioniert und mit dem Zellgehäuse verbunden. Durch diesen Schritt wird das Zellgehäuse durch die mindestens eine Puffereinheit in zumindest zwei Teilbereiche unterteilt. In einem weiteren Schritt werden in die Teilbereiche Zellstapel hineingesetzt. Anschließend wird mindestens ein Volumen der Puffereinheit mit einem Druck, insbesondere einem Überdruck, beaufschlagt, um die Zellstapel ortsfest im Zellgehäuse zu arretieren.

Durch dieses Verfahren kann die Puffereinheit im Vorfeld mit dem Zellgehäuse verbunden werden, um einen thermisch besonders optimalen Übergang zwischen der Puffereinheit und dem Zellgehäuse zu ermöglichen.

Nachstehend werden mehrere Ausführungsbeispiele der Erfindung anhand der Zeichnungen näher erläutert. Es zeigen:
Fig. 1 eine Schnittdarstellung einer Batteriezelle gemäß einer ersten Ausführungsform der Erfindung,
Fig. 2 eine Schnittdarstellung einer Batteriezelle gemäß einer zweiten Ausführungsform der Erfindung,
Fig. 3 eine Schnittdarstellung einer Batteriezelle gemäß einer dritten Ausführungsform der Erfindung,
Fig. 4 eine Schnittdarstellung einer Batteriezelle gemäß einer vierten Ausführungsform der Erfindung, und
Fig. 5 ein schematisches Ablaufdiagramm zum Veranschaulichen von Verfahren zum Einbringen von Zellstapeln in ein Zellgehäuse gemäß Ausführungsformen der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

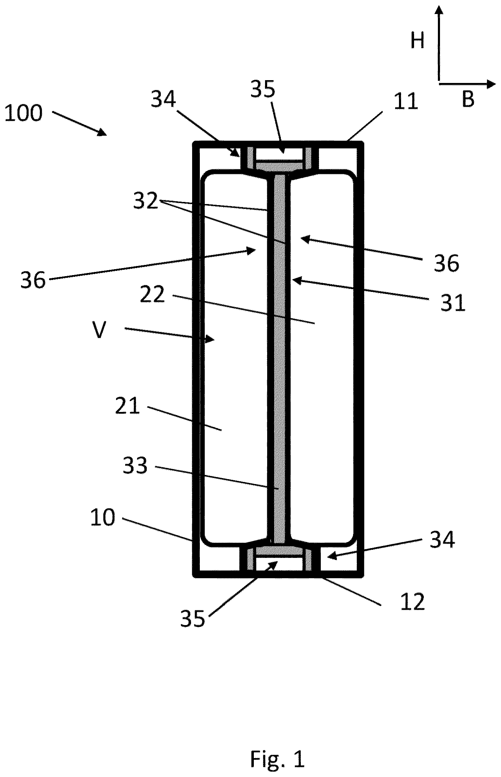

Die Fig. 1 zeigt eine Schnittdarstellung einer Batteriezelle 100 gemäß einer ersten Ausführungsform der Erfindung. Hierbei ist der Aufbau der Batteriezelle 100 entlang einer Höhenrichtung H und einer Breitenrichtung B veranschaulicht.

Insbesondere wird eine nicht bezifferte Batterieanordnung veranschaulicht, die ein Zellgehäuse 10 der Batteriezelle 100, mindestens zwei Zellstapel 21, 22 der Batteriezelle 100 und mindestens eine Puffereinheit 30 aufweist.

Der Übersicht halber sind Zellverbinder, Batteriepole und weitere Komponenten, wie beispielsweise Berstmembran, Beschichtungen des Zellgehäuses und der Schichtaufbau der Zellstapel 21, 22, nicht näher beschrieben und illustriert.

Das Zellgehäuse 10 ist beispielhaft als ein Gehäuse einer prismatischen Batteriezelle 100 ausgestaltet und kann aus einer Aluminiumlegierung bestehen. Zelldeckel, die das Zellgehäuse 10 verschließen sind der Übersicht halber nicht dargestellt. In einem Innenvolumen V des Zellgehäuses 10 sind im dargestellten Ausführungsbeispiel zwei Zellstapel 21, 22 angeordnet. Die Zellstapel 21, 22 können beispielsweise aus einer Vielzahl von Anodenschichten, Kathodenschichten und Separatorschichten bestehen, die aufgerollt oder gestapelt angeordnet sind und dazu eingerichtet sind, eine Batteriezelle 100 basierend auf einer Lithium-lonen-Technologie auszubilden.

Die Zellstapel 21, 22 sind entlang der Breitenrichtung B aneinander gereiht. Weiterhin ist das Innenvolumen V mit einer Elektrolytlösung zumindest teilweise gefüllt.

Die Puffereinheit 30 ist ebenfalls im Innenvolumen V des Zellgehäuses 10 angeordnet. Die Zellstapel 21, 22 sind durch die Puffereinheit 30 voneinander beabstandet. Hierbei erstreckt sich die Puffereinheit 30 entlang einer Höhenrichtung H und einer Längenrichtung, welche senkrecht zur Höhenrichtung H und zur Breitenrichtung B ausgerichtet ist und bildet eine Grenze zwischen den Zellstapeln 21, 22 aus. Insbesondere bildet eine Wandung 31 der Puffereinheit 30 eine Grenze zwischen den Zellstapeln 21, 22 aus.

Die Puffereinheit 30 besitzt hierbei eine Steifigkeit bzw. mechanische Stabilität auf und stützt sich entlang der Höhenrichtung H zwischen einer kopfseitigen Wand 11 und einer bodenseitigen Wand 12 des Zellgehäuses 10 ab. Alternativ oder zusätzlich kann die Puffereinheit 30 randseitig zumindest bereichsweise mit dem Zellgehäuse 10 verbunden sein. Dies kann beispielsweise durch eine Schweißverbindung realisiert werden.

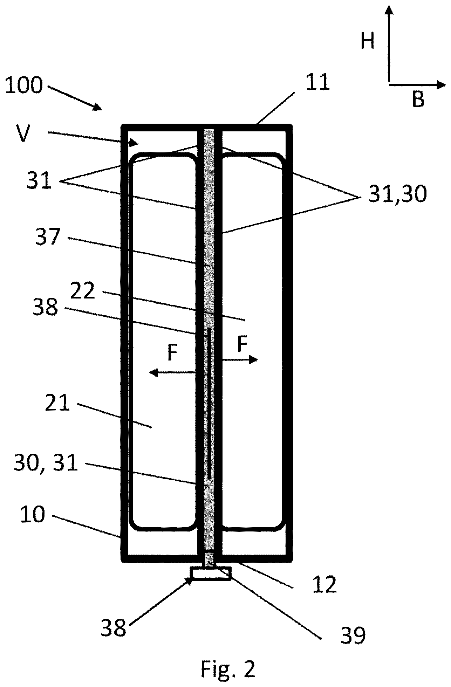

Im dargestellten Ausführungsbeispiel ist die Puffereinheit 30 als eine mehrschichtige Matte bzw. eine Wandung 31 geformt und weist elastische bzw. federnde Materialeigenschaften auf. Insbesondere ist die Puffereinheit 30 im Zellgehäuse 10 verpresst und übt eine Federkraft F (siehe Fig. 2) auf beide Zellstapel 21, 22 aus, um diese ortsfest im Innenvolumen V zu arretieren.

Die Wandung 31 der Puffereinheit 30 weist einen Schichtaufbau mit mehreren Materialschichten 32, 33 auf. Insbesondere besteht die Wandung 31 aus zwei äußeren Materialschichten 32, die aus einem thermisch leitfähigen Material hergestellt sind. Beispielsweise sind die äußeren Materialschichten 32 als eine Aluminiumfolie oder einer Aluminiumlegierung hergestellt. Zwischen den äußeren Materialschichten 32 ist eine innere Schicht 33 bzw. ein Kern vorgesehen, welcher aus einem komprimierbaren Kunststoff, beispielsweise in Form eines Schaums, ausgebildet ist.

Die äußeren Materialschichten 32 sind thermisch leitend mit dem Zellgehäuse 10 gekoppelt und können somit aus dem Inneren der Batteriezelle 100 Wärme abführen. Hierfür erstrecken sich die äußeren Materialschichten 32 entlang der Höhenrichtung H über das gesamte Zellgehäuse 10.

Randseitig geht die Wandung 31 der Puffereinheit 30 zumindest bereichsweise in jeweils einen Verbindungssteg 34 über, welcher die Wandung 31 thermisch mit dem Zellgehäuse 10 koppelt. Die äußeren Materialschichten 32 erstrecken sich hierbei auch über die Verbindungsstege 34 hinaus und sind mit dem Zellgehäuse 10 thermisch leitend verbunden. Diese thermisch leitfähige Verbindung zwischen dem Zellgehäuse und den äußeren Materialschichten 32 der Puffereinheit 30 können stoffschlüssig oder reibschlüssig bzw. kraftschlüssig umgesetzt sein.

Im dargestellten Ausführungsbeispiel sind die Verbindungsstege 34 gabelförmig ausgestaltet. Durch eine derartige Form der Verbindungsstege 34 werden Aufnahmeabschnitte 36 zum Aufnehmen und Positionieren der Zellstapel 21, 22 geformt. Die Aufnahmeabschnitte 36 werden zwischen der Wandung 31 und zwischen zwei Verbindungsstegen 34 gebildet und ermöglichen ein formschlüssiges Anordnen von Abschnitten der Zellstapel 21, 22. Hierbei bilden die Verbindungsstege 34 Querstege 51 aus, die in Breitenrichtung B beidseitig hinausragen und die Aufnahmeabschnitte 36 entlang der Höhenrichtung H begrenzen. Insbesondere können die Aufnahmeabschnitte 36 durch die Querstege 51 die Zellstapel 21, 22 formschlüssig entlang der Höhenrichtung H abstützen und somit eine Bewegung der Zellstapel 21, 22 entlang der Höhenrichtung H verhindern. Diese Maßnahmen vereinfacht das Einsetzen der Zellstapel 21, 22 und der Puffereinheit 30 in dem Innenvolumen V des Zellgehäuses 10.

Weiterhin sind bei dem dargestellten Ausführungsbeispiel Kanäle 35 zum Leiten von Fluiden, insbesondere in Form von gasförmigen oder flüssigen Bestandteilen der Elektrolytlösung gebildet, die durch die gabelförmige Ausgestaltung der Verbindungsstege 34 entsteht. Dabei entstehen zwischen den Verbindungsstegen 34 und angrenzenden Wänden 11, 12 des Zellgehäuses 10 Hohlräume, die als Kanäle 35 fungieren. Die Kanäle 35 erstrecken sich im dargestellten Ausführungsbeispiel entlang der nicht bezifferten Längenrichtung, welche senkrecht zur Höhenrichtung H und Breitenrichtung B der Batteriezelle 100 ausgerichtet ist.

Die Fig. 2 zeigt eine weitere Schnittdarstellung einer Batteriezelle 100 gemäß einer zweiten Ausführungsform der Erfindung. Hierbei ist die mindestens eine Puffereinheit 30 derart flexibel einstellbar ausgestaltet, dass die Federkraft F im Vorfeld oder nachträglich variierbar ist. Hierzu weist die dargestellte Puffereinheit 30 zwei Wandungen 31 auf, welche mindestens ein mit einem Druck beaufschlagbares Volumen 37 ausbilden. Die Puffereinheit 30 kann somit als ein Luftpolster mit einem im Vorfeld einstellbarem Druck fungieren. Dabei kann das Volumen mit Luft oder einem anderem Gas oder einer Flüssigkeit gefüllt werden.

Weiterhin ist in dem Volumen 37 ein elastischer bzw. komprimierbarer Kern 33 angeordnet. Dieser Kern 33 ist beispielhaft als ein geschäumter Kunststoff ausgestaltet.

Der Druck im zumindest einem Volumen 37 der Puffereinheit 30 und damit die Federkraft F kann beispielsweise im Vorfeld bzw. bei der Herstellung der Puffereinheit 30 eingestellt werden. Im dargestellten Ausführungsbeispiel weist die Puffereinheit 30 einen verschließbar ausgestalteten Anschluss 39 auf, welcher sich durch eine Wand des Zellgehäuses 10 hindurch erstreckt und mit dem mindestens einen Volumen 37 der Puffereinheit 30 fluidführend verbunden ist. Ein Verschlussstopfen 38 des Anschlusses 39 dient zum fluiddichten Verschließen oder Versiegeln des Anschlusses 39.

Das Volumen 37 kann vorteilhafterweise nach dem Einbringen der Zellstapel 21, 22 in das Innenvolumen V des Zellgehäuses 10 mit einem Druck beaufschlagt werden, um die Federkräfte F aufzubauen. Während der Montage der Batteriezelle 100 kann das Volumen 37, welches im dargestellten Ausführungsbeispiel in Form einer Tasche oder eines Kissens ausgebildet ist, druckfrei bzw. über die Anschluss 39 offen bleiben. Nach dem Anordnen der Zellstapel 21, 22 und der Puffereinheit 30 im Innenvolumen V des Zellgehäuses 10 kann das Volumen 37 mit einem Druck beaufschlagt werden, sodass die Puffereinheit 30 als eine Gasfeder wirken kann.

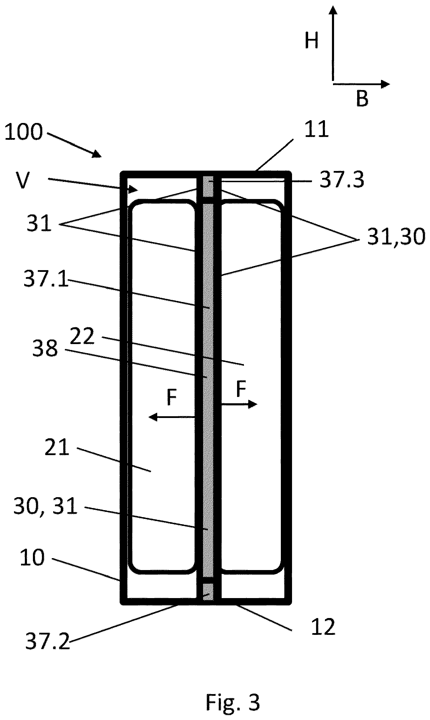

In Fig. 3 ist eine Schnittdarstellung einer Batteriezelle 100 gemäß einer dritten Ausführungsform der Erfindung gezeigt. Im Unterschied zum in Fig. 2 gezeigten Ausführungsbeispiel ist hier eine Puffereinheit 30 mit mehreren Volumen 37.1, 37.2, 37.3 vorgesehen. Dabei können die jeweiligen Volumen 37.1, 37.2, 37.3 mit unterschiedlichen Drücken beaufschlagt werden, um eine entlang der Höhenrichtung H und/oder der Längsrichtung variierende Druckverteilung auf die Zellstapel 21, 22 einzustellen.

Beispielsweise kann ein mittig bzw. zentriert angeordnetes Volumen 37.1 mit einem Überdruck beaufschlagt und randseitige Volumen 37.2 und 37.3 mit einem Umgebungsdruck eingestellt sein. Bei einer alternativen Ausgestaltung können die randseitige Volumen 37.2 und 37.3 einen gegenüber dem Volumen 37.1 zwischen den Zellstapeln 21, 22 erhöhten Überdruck aufweisen, durch welchen die Puffereinheit 30 auswölbt, um Aufnahmeabschnitte 36 auszubilden bzw. die gabelförmigen Verbindungsstege 34 nachzubilden. Je nach Ausgestaltung kann der Druck im mittigen Volumen 37.1 auf die randseitigen Volumen 37.2 und 37.3 einwirken und diese auswölben.

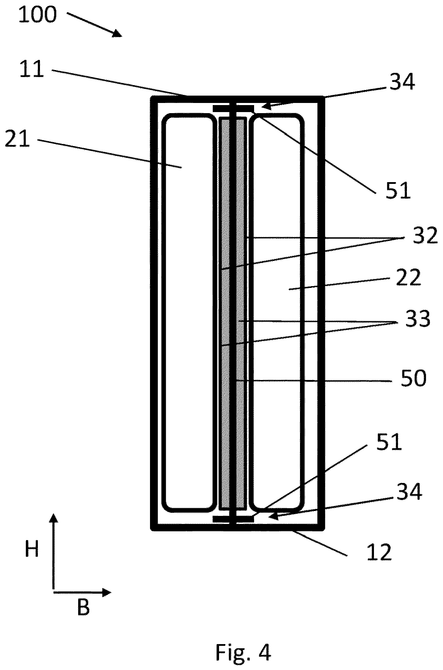

Die Fig. 4 zeigt eine weitere Schnittdarstellung einer Batteriezelle 100 gemäß einer vierten Ausführungsform der Erfindung, bei der die Verbindungsabschnitte bzw. Verbindungsabschnitte 34 als randseitige Abschnitte eines Verstärkungsblechs 50 ausgestaltet sind und seitlich in Breitenrichtung B hinausragende Querstege 51 aufweisen. Durch diese Maßnahme werden analog zum in Fig. 1 gezeigten Ausführungsbeispiel Aufnahmeabschnitte 36 gebildet, um die Zellstapel 21, 22 ortsfest im Zellgehäuse 10 zu positionieren.

Das Verstärkungsblech 50 erstreckt sich entlang der Höhenrichtung B über eine gesamte Abmessung des Innenvolumens V des Zellgehäuses 10 und ist randseitig bzw. endseitig stoffschlüssig mit dem Zellgehäuse 10 verbunden. Beispielsweise kann das Verstärkungsblech 50 mit einer kopfseitigen Wand 11 und einer bodenseitigen Wand 12 des Zellgehäuses 10 verschweißt oder verlötet sein.

Beidseitig des Verstärkungsblechs 50 in Breitenrichtung B ist jeweils eine innere Schicht 33 bzw. ein Kern angeordnet, welcher aus einem komprimierbaren Kunststoff, beispielsweise in Form eines Schaums oder Elastomers oder eines Vlieses, ausgebildet ist. Alternativ können die inneren Schichten 33 in Form eines elastischen oder komprimierbaren Metalls, beispielsweise in Form einer Feder oder eines Schaums, ausgestaltet sein. Diese inneren Schichten 33 sind außenseitig durch jeweils eine äußere Schicht 32 versiegelt. Die äußeren Schichten 32 sind als Metallfolien ausgebildet und können beispielsweise aus Aluminium bestehen. Im Bereich der Verbindungsabschnitte 34 sind die äußeren Schichten 32 stoffschlüssig mit dem Verstärkungsblech 50 verbunden. Dies kann durch Verpressen, Löten oder Schweißen erfolgen. Das Verstärkungsblech 50 ist im dargestellten Ausführungsbeispiel aus Aluminium hergestellt.

Im dargestellten Ausführungsbeispiel weist das Verstärkungsblech 50 eine Dicke bzw. Materialstärke auf, die eine Dicke bzw. Materialstärke der äußeren Schichten 32 übersteigt. Beispielsweise kann das Verstärkungsblech 50 eine Materialstärke von 0,5 mm und die äußeren Schichten eine Materialstärke von 0,1 mm aufweisen.

Die inneren Schichten 33 können vollständig bzw. von allen Seiten durch die äußeren Schichten 32 bedeckt sein. Alternativ können die inneren Schichten 33 bereichsweise gegenüber dem Innenvolumen V des Zellgehäuses 10 geöffnet sein.

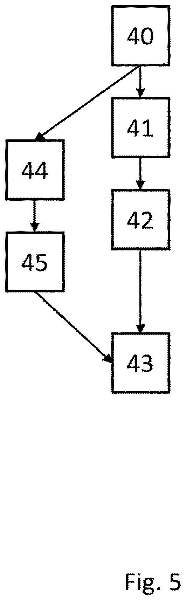

Die Fig. 5 zeigt ein schematisches Ablaufdiagramm zum Veranschaulichen eines erfindungsgemäßen Verfahrens zum Einsetzen von Zellstapeln 21, 22 in ein Innenvolumen V eines Zellgehäuses 10 einer Batteriezelle 100.

In einem Schritt 40 wird mindestens ein Volumen 37 der Puffereinheit 30 gegenüber einer Umgebung geöffnet oder mit einem Unterdruck beaufschlagt.

In einem weiteren Schritt 41 wird eine Anordnung aus Zellstapeln 21, 22 und der Puffereinheit 30 in das Innenvolumen V des Zellgehäuses 10 hineingeschoben.

In einem weiteren Schritt 43 werden die Zellstapel 21, 22 im Zellgehäuse 10 durch Beaufschlagen des Volumens 37 der Puffereinheit 30 mit einem Druck und durch Verschließen des Volumens 37 mit dem Verschlussstopfen 38 ortsfest arretiert. Dieser Schritt kann nach dem Verschließen 42 des Zellgehäuses 10 und dem Befüllen des Zellgehäuses 10 mit einer Elektrolytlösung umgesetzt werden.

Gemäß einer alternativen Ausgestaltung kann in einem Schritt 44 des Verfahrens mindestens eine Puffereinheit 30 in dem Innenvolumen V des Zellgehäuses 10 positioniert und mit dem Zellgehäuse verbunden werden. Durch diesen Schritt 44 wird das Zellgehäuse 10 durch die mindestens eine Puffereinheit 30 in zumindest zwei Teilbereiche unterteilt.

In einem weiteren Schritt 45 werden in die Teilbereiche Zellstapel 21, 22 hineingesetzt. Anschließend 43 wird mindestens ein Volumen 37 der Puffereinheit 30 mit einem Druck, insbesondere einem Überdruck, beaufschlagt, um die Zellstapel ortsfest im Zellgehäuse zu arretieren.

## Patentansprüche

1. Batterieanordnung, aufweisend eine Batteriezelle (100) mit einem Zellengehäuse (10), aufweisend mindestens zwei Zellstapel (21, 22), welche in dem Zellengehäuse (10) angeordnet sind, und aufweisend mindestens eine Puffereinheit (30), wobei mindestens zwei Zellstapel (21, 22) durch die Puffereinheit (30) voneinander beabstandet sind, **dadurch gekennzeichnet, dass** die Puffereinheit (30) mindestens eine Wandung (31) aufweist, wobei die Wandung zumindest bereichsweise thermisch leitfähig ausgestaltet ist.

2. Batterieanordnung nach Anspruch 1, wobei mindestens eine Wandung (31) der Puffereinheit (30) aus einer oder mehreren Materialschichten (32, 33, 50) besteht, wobei mindestens eine Materialschicht (32, 33, 50) starr oder elastisch oder komprimierbar ausgestaltet ist.

3. Batterieanordnung nach Anspruch 1 oder 2, wobei eine äußere Materialschicht (32) der Wandung (31) der Puffereinheit (30), welche einem Zellstapel (21, 22) zugewandt angeordnet ist, und/oder ein Verstärkungsblech (50) der Wandung (31) aus einem thermisch leitfähigen Material besteht.

4. Batterieanordnung nach Anspruch 3, wobei das Verstärkungsblech (50) zumindest bereichsweise thermisch leitend mit dem Zellgehäuse (10) verbunden ist, wobei die mindestens eine äußere Materialschicht (32) zumindest bereichsweise mit dem Zellgehäuse (10) und/oder mit dem Verstärkungsblech (50) thermisch leitend verbunden ist.

5. Batterieanordnung nach einem der Ansprüche 1 bis 4, wobei die Puffereinheit (30) randseitig zumindest bereichsweise direkt oder indirekt mit dem Zellgehäuse (10), insbesondere thermisch leitfähig, verbunden ist.

6. Batterieanordnung nach einem der Ansprüche 1 bis 5, wobei die Puffereinheit (30) mindestens zwei Wandungen (31) aufweist, welche mindestens ein mit einem Druck beaufschlagbares Volumen (37) ausbilden.

7. Batterieanordnung nach Anspruch 6, wobei die Puffereinheit (30) einen verschließbar ausgestalteten Anschluss (39) aufweist, welcher mit dem mindestens einen Volumen (37) fluidführend verbunden ist.

8. Batterieanordnung nach Anspruch 6, wobei die Puffereinheit (30) einen verschließbar ausgestalteten Anschluss (39) aufweist, welcher sich durch eine Wand (11, 12) des Zellgehäuses (10) hindurch erstreckt und mit dem mindestens einen Volumen (37) fluidführend verbunden ist.

9. Batterieanordnung nach einem der Ansprüche 1 bis 8, wobei die Puffereinheit (30) randseitig zumindest bereichsweise indirekt über mindestens einen Verbindungssteg (34) thermisch mit dem Zellgehäuse (10) gekoppelt ist, wobei im Bereich des Verbindungsstegs (34) mindestens ein Quersteg (51) angeordnet ist.

10. Batterieanordnung nach einem der Ansprüche 6 bis 9, wobei das mindestens eine Volumen (37) der Puffereinheit (30) zumindest bereichsweise mit einem ofenporigen Schaum oder einem Füllstoff gefüllt ist.

11. Batterieanordnung nach einem der Ansprüche 6 bis 10, wobei das mindestens eine Volumen (37) der Puffereinheit (30) mit einem Gas oder einem Gasgemisch und/oder mit einer Flüssigkeit oder einem Flüssigkeitsgemisch befüllbar ist, um einen Druck innerhalb des Volumens (37) einzustellen.

12. Verfahren zum Einbringen von mindestens zwei Zellstapeln (21, 22) in ein Zellgehäuse (10), bei dem die mindestens zwei Zellstapel (21, 22) durch eine Puffereinheit (30) voneinander beabstandet sind, wobei mindestens ein Volumen (37) der Puffereinheit (30) gegenüber einer Umgebung geöffnet oder mit einem Unterdruck beaufschlagt wird, eine Anordnung aus Zellstapeln (21, 22) und der Puffereinheit (30) in das Zellgehäuse (10) hineingeschoben wird, und wobei die Zellstapel (21, 22) im Zellgehäuse (10) durch Beaufschlagen des Volumens (37) der Puffereinheit (30) mit einem Druck und Verschließen des Volumens (37) ortsfest arretiert werden.

13. Verfahren nach Anspruch 12, wobei die Puffereinheit (37) durch den eingestellten Druck in mindestens einem Volumen (37) zumindest bereichsweise thermisch mit dem Zellgehäuse (10) gekoppelt wird.

14. Verfahren nach Anspruch 12 oder 13, wobei die Puffereinheit (30) zumindest bereichsweise stoffschlüssig, beispielsweise durch Schweißen oder Löten, thermisch leitend mit dem Zellgehäuse (10) verbunden wird.

15. Verfahren zum Einbringen von mindestens zwei Zellstapeln (21, 22) in ein Zellgehäuse (10), bei dem die mindestens zwei Zellstapel (21, 22) durch eine Puffereinheit (30) voneinander beabstandet sind, wobei mindestens eine Puffereinheit (30) in dem Zellgehäuse (10) positioniert und mit dem Zellgehäuse (10) verbunden wird, wobei das Zellgehäuse (10) durch die mindestens eine Puffereinheit (30) in zumindest zwei Teilbereiche unterteilt wird, wobei in die Teilbereiche Zellstapel (21, 22) hineingesetzt werden und mindestens ein Volumen (37) der Puffereinheit (30) mit einem Druck, insbesondere einem Überdruck, beaufschlagt wird, um die Zellstapel (21, 22) ortsfest im Zellgehäuse (10) zu arretieren.
